# EUROPEAN PATENT APPLICATION

(11) **EP 1 878 559 A1**
(43) Date of publication of application: **16.01.2008**
(21) Application number: 07010167.0
(22) Date of filing: 22.05.2007
(51) Int. Cl.: B29C 59/00, B29C 33/42, B60R 13/02

(54) **Irregular surface structure of an object surface**

(30) Priority: 25.05.2006 JP 2006145411
(71) Applicant: HONDA MOTOR CO., LTD., Tokyo 107-8556 (JP)
(72) Inventor: Shimizu, Toshimitsu, 4-1, Chuo 1-chome, Wako-shi,Saitama (JP)
(74) Representative: Trossin, Hans-Jürgen

(57) **Abstract**

An irregular surface structure (11) formed on the surface of an object (12) is disclosed. The irregular surface structure (11) is composed of convexities (13) and concavities (14) formed on the surface of then object (12). The surface roughness of bottom surfaces (14a) of the concavities (14) is greater than the surface roughness of top surfaces (13a) of the convexities (13).

## Description

The present invention relates to an improvement in an irregular surface structure composed of fine irregularities formed on the surface of an object.

Japanese Patent Laid-Open Publication No. 5-51882 (JP 5-51882 A) discloses a molding sheet in which a leather design feel is obtained by forming irregularities in the surface of an object. A summary of the molding sheet disclosed in JP 5-51882 A is described with reference to FIG. 6 hereof.

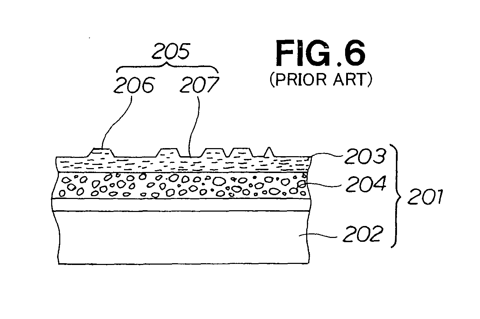

As shown in FIG. 6, a molding sheet 201 is composed of a base material 202 in the form of a sheet, a foamed layer 204 provided on the surface of the base material 202, and a surface layer 203 provided on the surface of the foamed layer 204. Irregularities 205 such as those of natural leather are formed on the surface layer 203, and a natural leathery appearance and feel are created. The irregularities 205 are formed from convexities 206 and concavities 207. Such a molding sheet 201 is used in materials in the interior of an automobile, for example.

However, in this molding sheet 201, the irregularities 205 formed on the surface layer 203 sometimes have pronounced glossiness. The term "glossiness" refers to the degree of gloss (shine), i.e., the characteristic of reflecting light, as measured with a glossmeter, which is a light-measuring device. The greater the glossiness, the higher the degree of gloss.

The glossiness of the irregularities 205 affects the appearance or the texture of the irregularities 205. If the glossiness of the irregularities 205 is too high, viewing the irregularities 205 will produce an impression of an inferior texture. There is room for improvement in terms of improving the texture of the design formed by the irregularities 205.

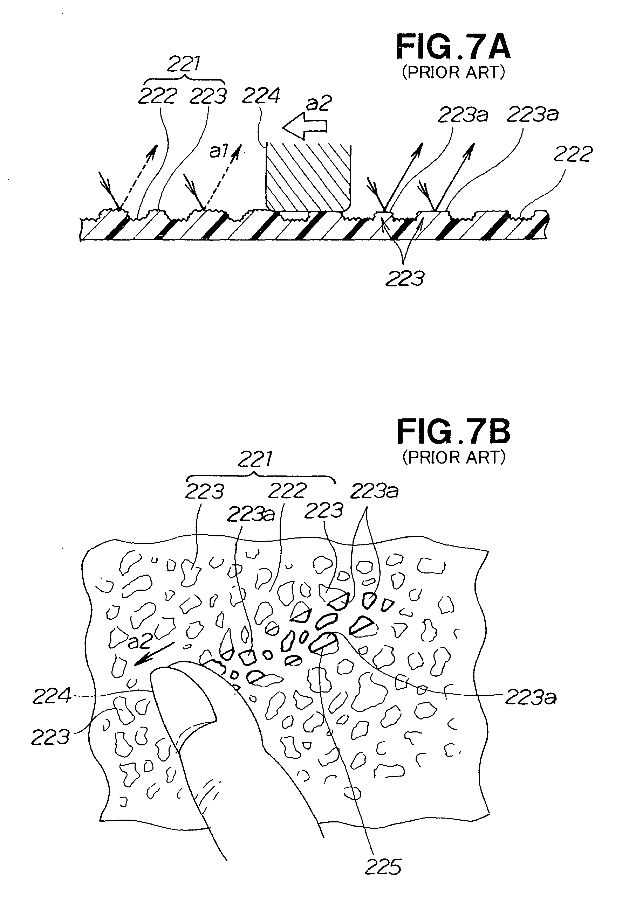

In view of this, a conventional technique is used to adjust the glossiness of irregularities 221 by finely roughening the entire surface of the irregularities 221, as shown in FIGS. 7A and 7B. Specifically, the conventional irregularities 221 are composed of concavities 222 and convexities 223. The concavities 222 and convexities 223 provide a uniform and fine surface roughness across the entire surface of the irregularities 221. The irregularities 221 therefore have low glossiness. In other words, the irregularities 221 do not reflect much light. The dashed line of the arrow a1 represents the fact that the amount of light reflected from the irregularities 221 is small in relation to the incident light directed onto the irregularities 221.

However, when the irregularities 221 are scratched with a hard object, such as a fingernail 224, for example, as shown by the arrow a2, the finely roughened top surfaces (distal end surfaces) 223a of the convexities 223 are damaged. In other words, fingernail marks 225 (scratches) are left in the scratched top surfaces 223a. In the top surfaces 223a of the convexities 223, glossiness is greater in the portions with scratches 225. As a result, nonuniformities arise in the glossiness of the irregularities 221 as a whole. Thus, if the scratches 225 are readily visible, a person looking at the irregularities 221 will have an impression of an inferior texture.

In view of this, there is a demand for a technique whereby the texture can be improved and a superior texture can be maintained over a long period of time in an irregular surface structure.

According to the present invention, there is provided an irregular surface structure of a surface of an object, comprising convexities and concavities formed on the surface of the object, wherein the surface roughness of the bottom surfaces of the concavities is greater than the surface roughness of the top surfaces of the convexities.

Thus, since the surface roughness of the bottom surfaces of the concavities is greater (higher) than the surface roughness of the top surfaces of the convexities, the glossiness of the bottom surfaces is lower than the glossiness of the top surfaces. In other words, there is a difference between the glossiness of the bottom surfaces and the glossiness of the top surfaces. Since there is a strong contrast between the bottom surfaces and the top surfaces, the irregular surface structure appears to be more prominent in three dimensions. Therefore, the visible texture of the irregular surface structure can be further improved.

The glossiness of the top surfaces is also comparatively high. This is because the surface roughness of the top surfaces of the convexities is lower than the surface roughness of the bottom surfaces of the concavities as described above. Therefore, when the irregular surface structure is scratched with relatively hard object, such as a fingernail, the glossiness of the top surfaces increases only slightly even if scratches are left in the convexities. When the irregular surface structure is scratched with a hard object, the movement of the hard object is blocked by the convexities and does not reach the bottom surfaces of the concavities. Therefore, there is no change in the glossiness of the bottom surfaces because the bottom surfaces are not scratched. Thus, the scratches are not readily visible when the entire irregular surface structure is viewed, even if the top surfaces are scratched. Therefore, the visible texture of the irregular surface structure can be sufficiently maintained over a long period of time.

Preferably, the top surfaces of the convexities are formed into mirror surfaces.

Certain preferred embodiments of the present invention will be described in detail below, by way of example only, with reference to the accompanying drawings, in which:
FIG. 1 is a perspective view of a sheet having an irregular surface structure according to a first embodiment of the present invention;
FIG. 2 is a cross-sectional view along line 2-2 of FIG. 1;
FIGS. 3A and 3B are schematic views showing the irregular surface structure of FIG. 1 as having been scratched with a fingernail;
FIGS. 4A and 4B are schematic views showing a modification of the irregular surface structure according to the first embodiment of the present invention;
FIGS. 5A, 5B, and 5C are schematic views showing an irregular surface structure according to a second embodiment of the present invention;
FIG. 6 is a cross-sectional view showing a molding sheet having a conventional irregular surface structure; and
FIGS. 7A and 7B are views of a sheet having another conventional irregular surface structure.

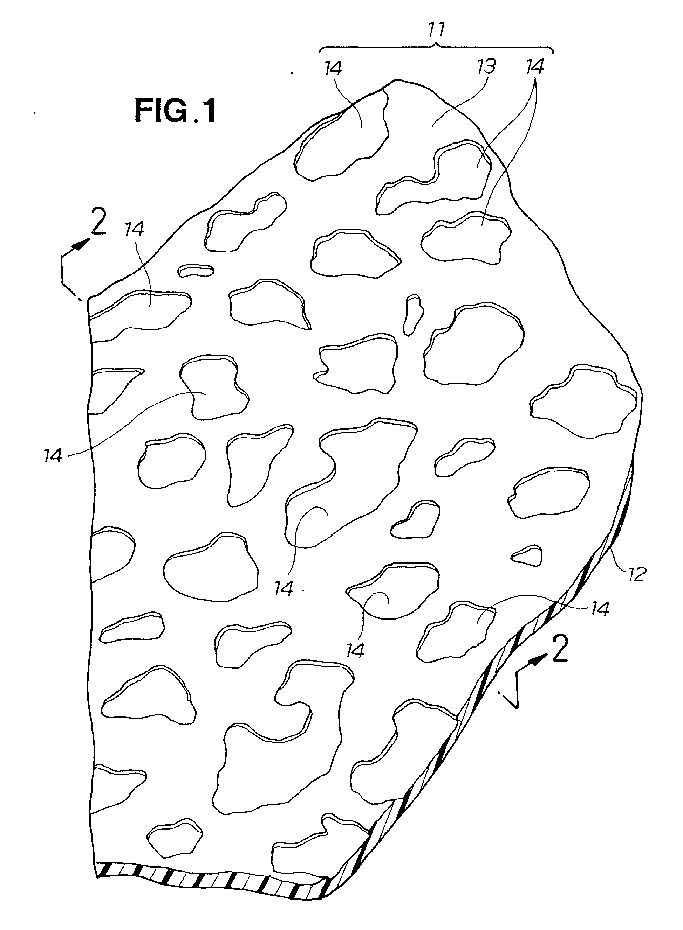

First, an irregular surface structure according to the first embodiment will be described with reference to FIGS. 1, 2, 3A, and 3B.

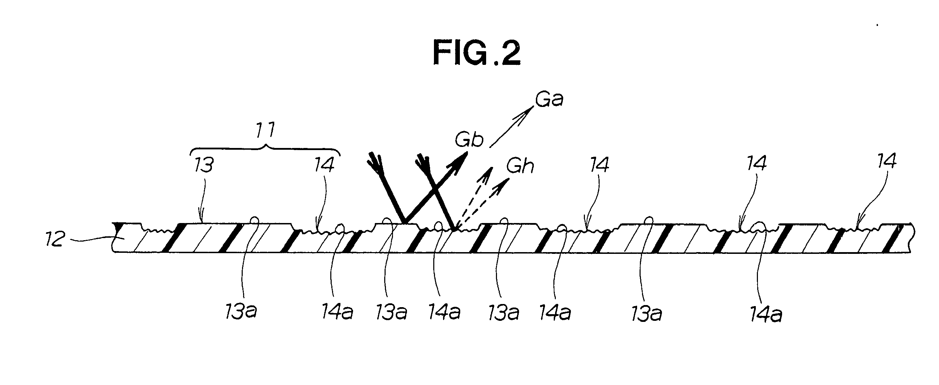

The irregular surface structure 11 of the first embodiment is composed of convexities 13 and concavities 14 formed on the surface of a sheet 12 (object 12), as shown in FIGS. 1 and 2. The top surfaces of the convexities 13 shown in FIG. 1 correspond to the surface of the sheet 12. The irregular surface structure 11 may be configured (formed with the concave-convex design inverted) so that the bottom surfaces of the concavities 14 correspond to the surface of the sheet 12. The concavities 14 are designed to have rough cloud shapes. The surface of the sheet 12 is formed having, e.g., a leather design by forming an irregular surface structure 11 composed of fine irregularities.

The irregular surface structure 11 of the first embodiment is used as the design for, e.g., the instrument panel of an automobile, an interior element of doors, and other such interior elements of an automobile. Other possible examples in which the irregular surface structure can be used include containers, household electronics, and other ordinarily handled items.

Also, the sheet 12 can have any thickness. The sheet 12 has a film. The sheet 12 may be composed of multiple superposed layers of different materials. Any material can be used for the sheet 12, and ABS resins (acrylonitrile-butadiene styrene copolymers), other resins, and rubber may be used.

The top surfaces 13a (distal end surfaces) of the convexities 13 are formed into a mirror surface. More specifically, the surface roughness Rb (not shown) of the top surfaces 13a is set to such a degree at which the shine of the surface changes only slightly even if the surface is scratched by fingernails or cloth.

The surface roughness Rh (not shown) of the bottom surfaces 14a of the concavities 14 is greater than the surface roughness Rb of the top surfaces 13a of the convexities 13 (Rh > Rb). Thus, the surface roughness Rh of the bottom surfaces 14a of the concavities 14 is different from the surface roughness Rb of the top surfaces 13a of the convexities 13.

The top surfaces 13a of the convexities 13 and the bottom surfaces 14a of the concavities 14 may also be characterized by glossiness instead of surface roughness Rb, Rh. For example, the glossiness Gb of the top surfaces 13a of the convexities 13 may be the same as that of a mirror surface and may correspond to the surface roughness Rb. The glossiness Gh of the bottom surfaces 14a of the concavities 14 may be set below the glossiness Gb of the top surfaces 13a of the convexities 13 (Gh < Gb), and may correspond to the surface roughness Rh.

Next, the glossiness Ga of the entire irregular surface structure 11 will be described. Incident light directed onto the irregular surface structure 11 is reflected by the top surfaces 13a of the convexities 13 and the bottom surfaces 14a of the concavities 14, as shown in FIG. 2. The top surfaces 13a are formed into mirror surfaces having a low surface roughness Rb (and a high glossiness Gb). Therefore, a large amount of light is reflected by the top surfaces 13a, as shown by the thick solid lines. The bottom surfaces 14a are formed to have a high surface roughness Rh (and a low glossiness Gh). Therefore, a small amount of light is reflected by the bottom surfaces 14a, as shown by the thin dashed lines.

The light reflected by the top surfaces 13a and the light reflected by the bottom surfaces 14a interfere with each other. Therefore, the amount of light reflected by the entire irregular surface structure 11 is a combination of the light reflected by the top surfaces 13a and the light reflected by the bottom surfaces 14a. The corresponding glossiness of the entire irregular surface structure 11 is denoted by Ga. The glossiness Ga of the entire irregular surface structure 11 is hereinafter referred to as the "overall glossiness Ga."

The overall glossiness Ga is greater than the glossiness Gh of the bottom surfaces 14a of the concavities 14, and less than the glossiness Gb of the top surfaces 13a of the convexities 13 (Gh < Ga < Gb). In other words, the overall glossiness Ga is substantially an intermediate value of the glossiness Gb and the glossiness Gh. The overall glossiness Ga is reduced despite the high glossiness Gb of the top surfaces 13a. Therefore, a person looking at the irregular surface structure 11 will perceive a high-quality texture in the irregular surface structure 11.

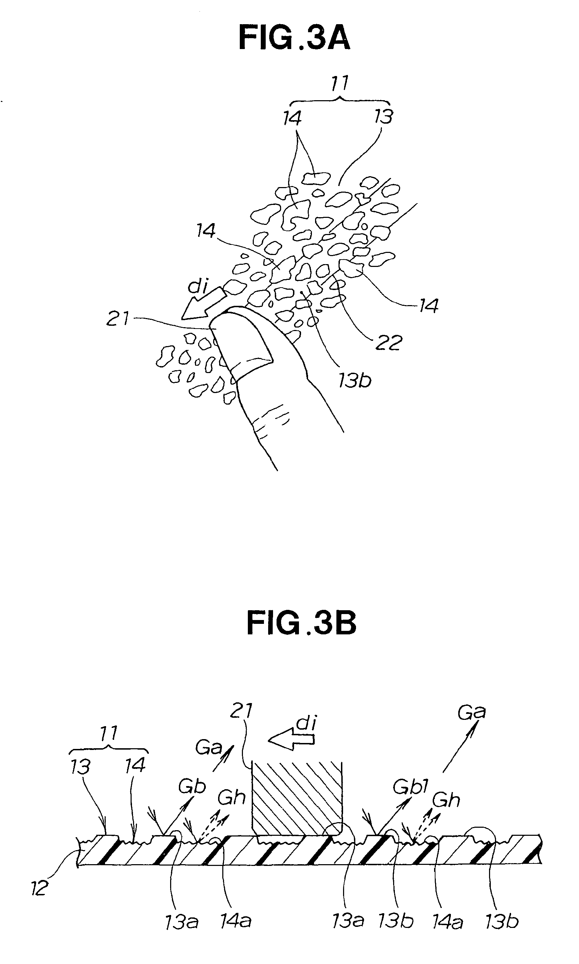

Scratches may be formed in the top surfaces 13a of the convexities 13 when, for example, the irregular surface structure 11 is scratched with a hard object such as a fingernail 21, as shown by the arrows di in FIGS. 3A and 3B. However, since the top surfaces 13a are mirror surfaces, the fine concavities are damaged only minimally. As a result, the glossiness Gb1 of the top surfaces 13b of the scratched convexities 13 is only slightly higher than the glossiness Gb before scratching. The amount of light reflected by the scratched top surfaces 13b decreases only slightly.

When the irregular surface structure 11 is scratched with a fingernail 21, the movement of the fingernail is blocked by the convexities 13 and does not reach the bottom surfaces 14a of the concavities 14. Therefore, the bottom surfaces 14a are prevented from being scratched and do not have scratch marks. Since the glossiness Gh of the bottom surfaces 14a does not change, the amount of light reflected by the bottom surfaces 14a does not change either. Therefore, there is no significant change in the amount of light reflected by the entire irregular surface structure 11 between unscratched and scratched conditions.

Thus, even if scratch marks 22 are left in the top surfaces 13a, the scratch marks 22 are not readily visible when the entire irregular surface structure 11 is viewed. Therefore, the visible texture of the irregular surface structure 11 can be adequately maintained over a long period of time.

The top surfaces 13a of the convexities 13 are formed into mirror surfaces as described above. Therefore, it is possible that an image could be seen in the top surfaces 13a, depending on the angle at which the irregular surface structure 11 is viewed. However, the light reflected by the top surfaces 13a and the light reflected by the bottom surfaces 14a interfere with each other. The appearance of an image in the top surfaces 13a can therefore be reduced.

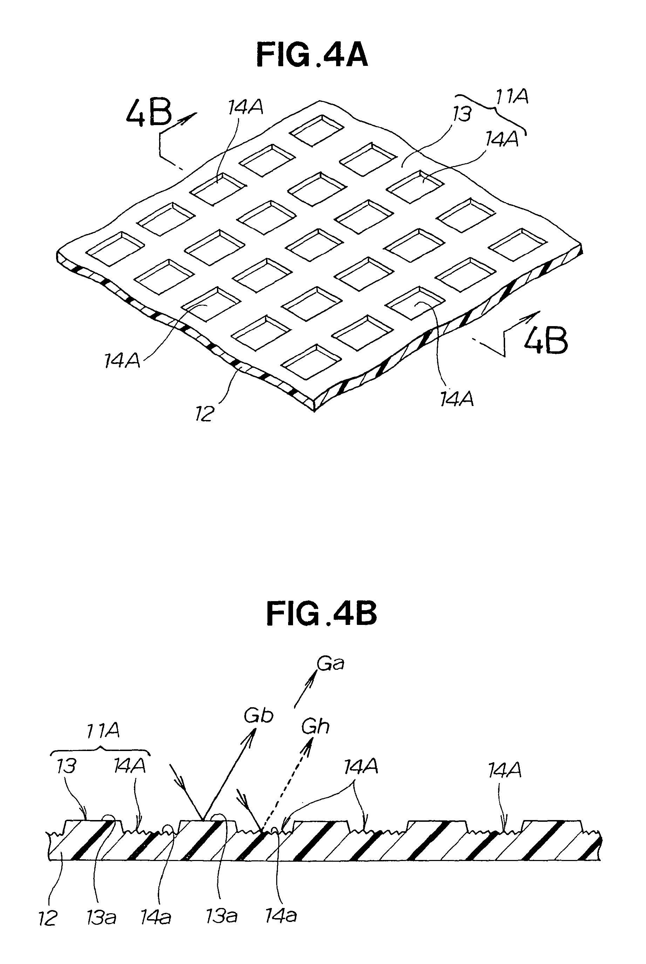

Next, a modification of the irregular surface structure according to the first embodiment will be described with reference to FIGS. 4A and 4B. In the modification, elements similar to those in the first embodiment shown in FIGS. 1, 2, 3A, and 3B are denoted by the same numerical symbols and are not described.

The different feature of the irregular surface structure 11A in the modification is that the design of the concavities 14 in the first embodiment is changed to the design of the concavities 14A, as shown in FIGS. 4A and 4B. The design of each concavity 14A is a quadrangle. The surface of the sheet 12 is formed in a geometrical pattern, e.g., a lattice pattern by forming an irregular surface structure 11A composed of fine irregularities. The irregular surface structure 11A of the modification exhibits the same effects as the irregular surface structure 11 of the first embodiment.

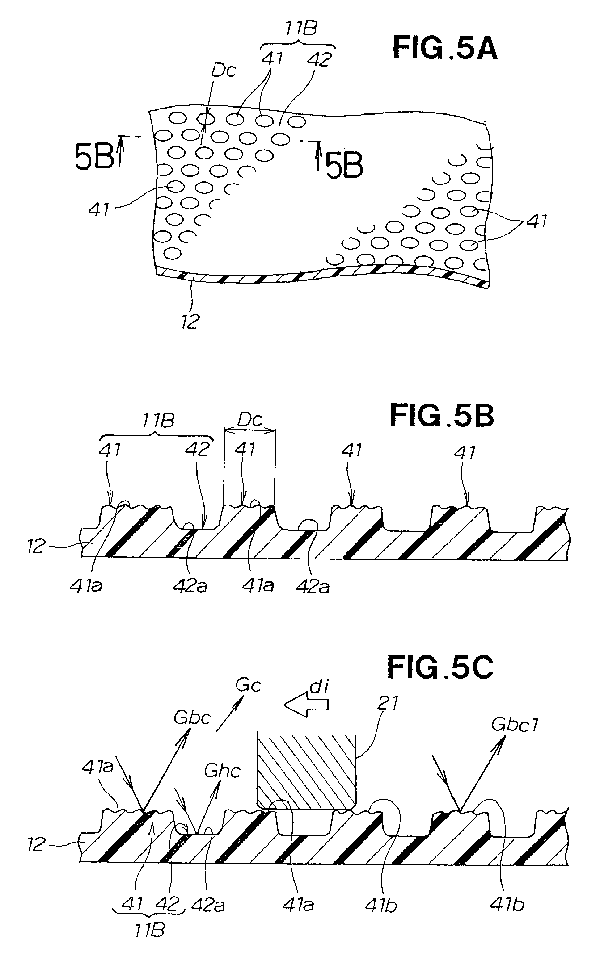

Next, the irregular surface structure of the second embodiment will be described with reference to FIGS. 5A, 5B, and 5C. In the second embodiment, elements similar to those in the first embodiment shown in FIGS. 1, 2, 3A, and 3B, as well as those in the modification shown in FIGS. 4A and 4B, are denoted by the same symbols and are not described.

As shown in FIGS. 5A and 5B, in the irregular surface structure 11B of the second embodiment, the design of the irregularities is inverted in relation to the irregular surface structure 11A in the modification shown in FIGS. 4A and 4B. The irregular surface structure 11B is composed of convexities 41 and concavities 42 formed on the surface of the sheet 12. The bottom surfaces 42a of the concavities 42 correspond to the surface of the sheet 12. The design of each convexity 41 is a circle. The diameter of each convexity 41 is Dc. The surface of the sheet 12 is formed in a geometrical design, e.g., a lattice pattern by forming an irregular surface structure 11B composed of fine irregularities.

The bottom surfaces 42a of the concavities 42 are formed into mirror surfaces. More specifically, the surface roughness Rhc (not shown) of the bottom surfaces 42a is set to such a degree at which the shine of the surface changes only minimally when the surface is scratched with a fingernail or cloth.

The top surfaces 41a of the convexities 41 have a "satin finished surface." The term "satin finished surface" refers to a nondirectional delustered surface provided with extremely fine irregularities, as in the skin of a pear. The surface roughness Rbc (not shown) of the top surfaces 41a is set above the surface roughness Rhc of the bottom surfaces 42a of the concavities 42 and below the surface roughness Rh of the bottom surfaces 14a of the concavities 14 in the first embodiment (Rhc < Rbc < Rh). Thus, the surface roughness Rhc of the bottom surfaces 42a of the concavities 42 is different from the surface roughness Rbc of the top surfaces 41a of the convexities 41.

The top surfaces 41a of the convexities 41 and the bottom surfaces 42a of the concavities 42 may be characterized by glossiness instead of surface roughness Rbc, Rhc. For example, the glossiness Ghc of the bottom surfaces 42a of the concavities 42 is the same as that of a mirror surface, and corresponds to the surface roughness Rhc. The glossiness Gbc of the top surfaces 41a of the convexities 41 is set below the glossiness Ghc of the bottom surfaces 42a of the concavities 42 and above the glossiness Gh of the bottom surfaces 14a of the concavities 14 in the first embodiment (Ghc > Gbc > Gh), and corresponds to the surface roughness Rbc.

Next, the glossiness Gc of the entire irregular surface structure 11B of the second embodiment will be described. Incident light directed onto the irregular surface structure 11B is reflected by the top surfaces 41a of the convexities 41 and the bottom surfaces 42a of the concavities 42, as shown in FIG. 5C. The top surfaces 41a of the convexities 41 are formed to have a high surface roughness Rbc (and a low glossiness Gbc). Therefore, a small amount of light is reflected by the top surfaces 41a. The bottom surfaces 42a of the concavities 42 are formed into mirror surfaces having a low surface roughness Rhc (and a high glossiness Ghc). Therefore, a large amount of light is reflected by the bottom surfaces 42a.

The light reflected by the top surfaces 41a and the light reflected by the bottom surfaces 42a interfere with each other. Therefore, the amount of light reflected by the entire irregular surface structure 11B is a combination of the light reflected by the top surfaces 41a and the light reflected by the bottom surfaces 42a. The corresponding glossiness of the entire irregular surface structure 11B is denoted by Gc. The glossiness Gc of the entire irregular surface structure 11B is hereinafter referred to as the "overall glossiness Gc."

The overall glossiness Gc is greater than the glossiness Gbc of the top surfaces 41a of the convexities 41, and less than the glossiness Ghc of the bottom surfaces 42a of the concavities 42 (Gbc < Gc < Ghc). In other words, the overall glossiness Gc is substantially an intermediate value of the glossiness Gbc and the glossiness Ghc. The overall glossiness Gc is reduced despite the high glossiness Ghc of the bottom surfaces 42a. Therefore, a person looking at the irregular surface structure 11B will perceive a high-quality texture in the irregular surface structure 11B.

Scratches may be formed in the top surfaces 41a of the convexities 41 when, for example, the irregular surface structure 11B is scratched with a hard object such as a fingernail 21, as shown by the arrow di in FIG. 5C. As a result, the glossiness Gbc1 of the scratched top surfaces 41b decreases.

However, the periphery of each convexity 41 is enclosed in concavities 42. Moreover, the surface area of the top surface 41a in each individual convexity 41 is small in comparison to the overall surface area of the concavities 42. Although less light is reflected by the scratched top surfaces 41b, the amount of light reflected by the bottom surfaces 42a that enclose the peripheries of the top surfaces 41b does not change. The light reflected by the scratched top surfaces 41b and the light reflected by the bottom surfaces 42a interfere with each other. Therefore, since there is little change in the amount of light reflected by the entire irregular surface structure 11B, a person looking at the irregular surface structure 11B is unlikely to notice the change in reflected light. In other words, the scratch marks are not readily visible.

In the present invention, the irregular surface structures 11, 11A, 11B can be used as interior elements of automobiles, trains, and buildings, and can also be used in the leather designs of shoes and the like. The irregular surface structures 11, 11A, 11B are not limited to a configuration formed on a sheet 12, and may have any shape. The convexities 13, 41 and concavities 14, 14A, 42 can have any size.

The irregular surface structures 11, 11A, 11B of the present invention can be used in the interiors of automobiles, trains, and other vehicles, as well as containers, household electronics, and other ordinarily handled items.

An irregular surface structure (11) formed on the surface of an object (12) is disclosed. The irregular surface structure (11) is composed of convexities (13) and concavities (14) formed on the surface of then object (12). The surface roughness of bottom surfaces (14a) of the concavities (14) is greater than the surface roughness of top surfaces (13a) of the convexities (13).

## Claims

1. An irregular surface structure (11) of a surface of an object (12), comprising convexities (13) and concavities (14) formed on the surface of the object (12), wherein the surface roughness of bottom surfaces (14a) of the concavities (14) is greater than the surface roughness of top surfaces (13a) of the convexities (13).

2. The irregular surface structure of claim 1, wherein the top surfaces (13a) of the convexities (13) are formed into mirror surfaces.
